(19) Europäisches Patentamt / European Patent Office / Office européen des brevets

(11) **EP 2 769 086 B1**

(12) **EUROPEAN PATENT SPECIFICATION**

(45) Date of publication and mention of the grant of the patent:
**04.01.2017 Bulletin 2017/01**

(21) Application number: **12849206.3**

(22) Date of filing: **15.10.2012**

(51) Int Cl.:
*F03B 13/20* (2006.01)    *F03B 13/22* (2006.01)
*F03B 13/18* (2006.01)    *F03B 13/24* (2006.01)

(86) International application number:
**PCT/SE2012/051102**

(87) International publication number:
**WO 2013/074018 (23.05.2013 Gazette 2013/21)**

(54) **WAVE POWER DEVICE**

WELLENENERGIEVORRICHTUNG

DISPOSITIF À ÉNERGIE HOULOMOTRICE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.10.2011 SE 1130100**

(43) Date of publication of application:
**27.08.2014 Bulletin 2014/35**

(73) Proprietor: **Vigor Wave Energy AB**
**412 88 Göteborg (SE)**

(72) Inventor: **EHRNBERG, Daniel**
**S-31196 Heberg (SE)**

(74) Representative: **Kransell & Wennborg KB**
**P.O. Box 27834**
**115 93 Stockholm (SE)**

(56) References cited:
| | |
|---|---|
| WO-A1-00/17519 | WO-A1-01/96737 |
| WO-A1-2006/067421 | WO-A1-2007/015269 |
| WO-A1-2008/091208 | WO-A1-2008/091208 |
| WO-A1-2010/007607 | GB-A- 2 218 156 |
| US-A1- 2010 019 498 | US-A1- 2010 019 498 |
| US-A1- 2010 314 871 | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention is related to a device for extraction of energy from wave motions in a liquid.

BACKGROUND OF INVENTION

Wave energy is a renewable source of energy which is considered to have a great potential in offering a considerable contribution to the energy production in the world. In order to be able to absorb the energy contained in the waves, there is a desire to design wave power plants which are robust and work reliably while at the same time efficiently harvest the energy contained in the waves. A proposal of a suitable way of making use of the energy in the waves is described in SE 529 687 in which a wave power device harvests energy from the waves by allowing water and air to enter tube shaped devices and make use of the wave motions to pump water through the pipes. Similar wave power plants are also described in for example US 6 476 511, GB 2 024 957, GB 1 579 929 and http://www.owel.co.uk.
Even though the above described plants disclose different solutions for making use of energy from waves, there is still a desire to further develop and improve de above described wave power plants.

SUMMARY OF INVENTION

The invention relates to a wave power plant which by adapting its geometrical design may improve harvesting of wave energy in an efficient way. The invention may for example be applied to such wave power devices which are described in WO 2008/091 208 or WO 2007/015 269.
The invention is in particular directed to the kind of wave power plants or wave power devices which comprises a flexible container which essentially reminds of a pipe or an oblong hollow reservoir. The container is designed to be flexible in order to be able to follow the wave motions when it is located in the liquid so that the container will achieve an essentially sinus shaped curvature. The container is further provided with openings in order allow a mixture of gas and liquid to enter and be exhausted. Energy will be produced by a flow of liquid (water) and gas (air) passing through the container and pushed forward by the waves while the container follows the wave motions so that a pressure will be present in the container. The container is connected to an energy converter which will make use of the energy contained in the flow. The energy converter may for example be connected to the container at the outlet or the inlet. Also other positions along the length of the extension of the container are possible.
It has turned out that, by adapting the cross-section of the pipe shaped container, which in general is circular, so that it has a width which is larger than its height, may the energy production be more efficient. By the insight that friction forms a large part of energy losses in the kind plants which are based on the principle that a liquid is pushed forward by the wave motions in a pipe shaped element, the geometrical design can be adapted and optimized. Normally a pipe having a circular cross-section provides minimized friction losses for a flow through a pipe. In the general case, a person skilled in the art therefore chooses a circular cross-section having in mind to keep the friction at a low level, since a circular cross-section minimizes friction. However, in the present case there is often a limitation concerning the height of the pipe, which is defined by the wave height, in order to achieve an efficient energy production. However, for practical reasons, is it often desired to provide a larger volume flow than what is possible with a circular cross-section considering the height limitation, which corresponds to the diameter of the circular pipe. A solution to this problem could be to lay down several pipes beside each other which is a common known solution which for example is described in WO 2010/007607 and WO 2007/015269.
The invention is based on the insight that, as an alternative to use several circular pipes beside each other, it is possible to use a pipe having a non-circular cross-sectional area that is wider than it is high. Under certain conditions, such a plant could provide a lower friction per mass unit flow than what is possible by using several circular pipes.
If the maximum allowable height is 1 metre a circular pipe having a diameter (=height) of 1 metre would have a circumference of around 3,14 (pi * diameter=pi) metres and a cross-sectional area of about 0,78 (pi * (diameter/2)$^2$ = pi / 4) square metres. In order to achieve a low friction is it desired that the quotient between the circumference and the cross-sectional area is as small as possible. In this case is it 4. If the double capacity (=the double cross-sectional area) is desired has there normally been two pipes laid down besides each other which means that both the cross-sectional area and the length of the circumference has been doubled (1,56 and 6,28, respectively) so that the quotient between cross-sectional area and length of the circumference thus is constant, i.e. 4 in both cases.
In case both pipes are replaced with for example a pipe having a cross-sectional area in the shape of a rectangle having a height of 1 metre its width will be 1,56 metres in order to achieve a cross-sectional area corresponding to the cross-sectional area of two circular pipes having a diameter of 1 metre. The circumference of the rectangular pipe will be 1,00 + 1,00 + 1,56 + 1,56 = 5,12 metres and its cross-sectional area is as already mentioned 1,56 square metres.

The quotient between the circumference and the cross-sectional area for the rectangular pipe will be around 3,3 which is less than for both the circular pipes and thus a theoretically lower friction for a flow through the pipe.

In practice, when designing a pipe, there are also other factors being important such as that the pipes shall be self-supporting so that its upper part does not collapse and disturb the flow or that there may be too large a slosh movement in the pipe. In order to avoid that the upper part collapses is it possible to insert some kind of spoke or supporting structure in the pipe even though it may influence the flow in a negative way. It is also desired that the process for harvesting wave energy should be optimized concerning the mixture of liquid and air, at least in those cases the process is based on the same principle of an increased pressure along the length of the pipe as for example described in WO 2008/091208. In the process described in WO 2008/091208 is it true that the harvest of energy ceases, or is drastically decreased, in those cases when the height of the pipe shaped, oblong device is above about 0,8 * the wave height. That is, the height of the pipe shall not be more than 80 % of the wave height wherein the wave height is the distance between the wave crest and wave trough. According to a somewhat simplified equation may the energy production be expressed as

$$P = \left(\frac{L}{\lambda}\right) \times (h - a) * \rho * g * v * a * B$$

wherein

P = Power (W=J/s=N*m/s=kg*m$^2$/s$^3$)
L = length of pipe/the container (m)
$\lambda$ = Wave length (m)
h = Wave height (m)
a = Height inside the pipe/the container (m)
B = Width inside the pipe/the container (m)
p = density of the liquid (kg / m$^3$)
g = 9,8 (m/s$^2$)
v = velocity of the liquid (m/s)

Some of these terms are already given as for example g and, in those cases the liquid is known, also $\rho$. $\rho$ is actually referring to the difference in density between the liquid and the gas but may be approximated with the density of the liquid since the density of a liquid in general is considerably larger than the density of a gas (in the case of water / air is the difference around 1000 times). L is not considered to influence other variable even though there is a maximum length where other difficulties in the form of various losses will cause the proportionality to decrease. Neither $\lambda$ is considered to have any direct influences for limitations of other parameters when it concerns wave lengths within the normal range for waves at sea.

v, the velocity of the liquid, may be adjusted in dependence of the attack angle of the oblong wave power device relative the direction of the propagation of the waves. Theoretically the velocity of the liquid will be the same as the velocity of propagation of the waves if the wave power device would be laid down aligned with the propagation direction of the waves. However, by laying down the device so that there will be an angle $\alpha$ relative the propagation direction of the waves the velocity of the liquid v will be the wave propagation velocity / cos $\alpha$. In case the wave propagation velocity is known and is more or less constant the velocity of the liquid may thus be controlled by placing the device at a desired attack angle relative the direction of propagation of the waves. The velocity of the liquid shall be optimized so that it will provide an efficient energy production which may be achieved by a relatively high velocity while at the same time high flow velocities will incur more friction losses.

The parameter h, the wave height, may also not be controlled as desired. Even though the wave height may vary considerably are there many places at sea where the wave height is rather constant. In order to optimize the wave power plants is it often advantageous to place the plants at locations where the wave height is relatively constant even though the kind of wave power plants which are described herein will manage to provide a relatively high energy production even when there are variations in the wave height. A location having a relatively constant wave height will thus in the normal case provide better conditions for harvesting a larger portion of the total wave energy compared to a location which have large variations in the wave height even though the total wave energy is of the same magnitude at both locations. This kind of wave power plant is considered to be particularly suitable for an expected wave height or amplitude somewhere between 1 and 6 metres, preferably between 2 and 4 metres, even though these wave power plants also works for wave heights which deviates from these values. Large wave heights are often associated with rough weather conditions in general, which may make it more difficult to make use of the energy and cause wear to the wave power plant. However, the wave height will influence the optimization of the geometry of the pipe which is realized if it is assumed that all parameters except h, **a** and B are constant according to the formula for energy production cited above. In this case is it valid that

$$P \propto (h - a) * a * B = hBa - Ba^2 = f(a)$$

f(a) may be derived with respect to a in order to get a maximum value for the first order derivative

$$f'(a) = 0$$

$$f'(a) = hB - 2 * Ba = B(h - 2a) \Longrightarrow a = h/2 \; för \; f'(a) = 0$$

A height a of the pipe which corresponds to half the wave height h will thus result in a theoretical maximum value for the energy production. This is a maximum value since the second derivative f''(a) is negative, -2 * B.

Concerning **a** (the inner height of the pipe), simulations have shown that a suitable height for this kind of plants is between 0,3 h and 0,4 h in order to create a "batch flow", i.e. a flow which alternately comprises liquid (water) and gas (air), in order to build up a pressure in the pipe. For the case when the estimated, relative values of **a** from the simulation (**a** is between 0,3 and 0,4 parts of the wave height) are combined with the previously suggested interval of a wave height between 1 and 6 metres, the result will be a minimum value of 0,3 metres and a maximum value of 2,4 metres. For example, it has turned out that a satisfactory energy production will be achieved already at a height of the pipe of 0,3 metres for waves having a height of 1 metre, i.e. when the height of the pipe corresponds to 0,3 * the wave height. A satisfactory energy production has been achieved for simulations for a wide variety of values of the height of the pipe relative to the wave height, but in general the height of the pipe is somewhere between 0,2 and 0,80 parts of the wave height, preferably between 0,2 and 0,65 parts of the wave height and presumably the best results will be achieved within the limits of 0,2 and 0,55 parts of the wave height. The problem associated with defining exact values is partly due to the desire of providing a plant which may handle quite large variations in wave height. If the plant has a relatively large height of the pipe relative expected wave height it will perform worse in producing energy at smaller wave heights and the theoretical limit for energy production for this kind of plants is that the height of the pipe has to be smaller than the wave height. A plant having a smaller relative height in relation to expected/desired wave height may thus be better at adapting to deviations/tolerances for changes between expected/desired wave height and increases thereof without a termination of the energy production.

Concerning the inner width B there are no simple direct theoretical restrictions which can be given, such as for the height of the pipe. The width could thus be designed so that the pipe is provided with a cross-sectional area of the desired size. There are, however, limitations concerning constructional aspects in order to avoid collapse of the pipe while the pipe at the same time shall be flexible and able to follow the wave motions which causes a desire to restrict the width. Another limiting feature is that if the pipe is designed too wide may the energy in the wave dissipate to quickly and an efficient flow in order to create a desired pressure may not be achieved since there is a need for practical reasons to have a certain length of the pipe to reach a satisfactorily energy production level.

Concerning the inner measures, the width B and the height **a** of the pipe or the container, these are referring to maximum values of a cross-sectional area of a cross-section perpendicular to the extension of the container in the length direction wherein the width is measured as a horizontal distance and the height as a vertical distance inside a container. The measurements may for example be performed when the pipe or the container is at rest, such as when it is floating in a liquid where there are essentially no wave motion or when it is located on the ground. The container is preferably designed so that it has a self-supporting body having a width which is larger than its height when the container not is subjected to any external forces in order to influence its cross-sectional geometry and that the container will assume essentially the same shape in use as when it is at rest. The general idea is that essentially the entire container is designed with a cross-section for achieving an optimized efficiency even though it may be possible to design parts of the container having another geometry, e.g. at the inlets and the outlets. It is also possible that the container when required may be provided with stays or other supportive structures inside in order to provide an improved strength and stability. The need for these kinds of supportive structures may be particularly great when the width of the container is considerably larger than its height.

The container is thus constructed to include a surface or side intended to be facing downwards, alternatively to be designed with respect to its cross-sectional area so that it may be turned 180 degrees (half a full turn) around its longitudinal axis and having two sides which are intended or suitable to be facing downwards when in use. In these positions the intention is that the container shall have a width which is larger than its height.

A plant according to the invention shall thus be designed with the purpose that the pipe through which liquid and gas is transported is designed so that it is wider than it is high; generally that the width is at least 20 per larger than the height. Considering the above reasoning relating to lower friction losses for a larger width it is also advantageous in most cases that the width is at least 2 times as large as the height.

Concerning limitations of the maximum width of the plant has it already been mentioned that constructional aspects, e.g. strength, or limitations of the available energy in the waves which decide the magnitude of the width of the pipe. A further limitation is that a relatively wide plant may cause slosh movements which disturb the energy production. This is particularly relevant when the plant has its longitudinal extension located with an attack angle $\alpha$ relative the wave propagation direction, i.e. the wave propagation direction and the direction of longitudinal extension of the container differs from each other. The reason for placing the container angled relative the wave propagation direction is to be able to make use of a larger width of the wave and thus more energy. It will thus be differences between the different lateral side parts due to the fact that they will be in different wave phases, i.e. the different side parts of the pipe will thus generally be at different heights which may cause an undesired flow from one side to the other. In view of the effects pointed out above in this kind of plants the width in general should be limited to be maximum 15 times as large as the height and in most cases is it assumed that a width which is up to 6 times as large as the height represents suitable proportions.

In most cases, taking into account advantages and disadvantages of different relationships between the width and height, is it expected that a width B which is 2 to 5 times as large as the height of the pipe is within the desired proportions. In normal cases, proportions between width and height within the interval 3 - 5 are preferred in order to achieve relatively small friction losses while it is reasonably easy to construct these plants without running the risk of collapsing or that the width in an adverse way will cause undesired slosh movements.

Generally, as large a part as possible of the container shall be designed according to the above described guidelines. In almost all cases at least 20 % of the length of the container between inlet and outlet will be designed according to the above specified width and height relations, in general will this apply for at least half the length of the container.

For a plant adapted to a wave height of 2 metres the above specified most preferable interval for the height of plant (between 0,2 and 0,55 * the wave height) and width (between 3 and 5 times the plant height) should provide a height of the pipe between 0,4 and 1,1 metres and a width between 1,2 and 5,5 metres.

Concerning the shape of the plant may it vary from having a fairly rectangular shaped cross-section to be oval or designed with an essentially planar lower side and an arc shaped or roof-ridge shaped upper part which contributes in providing stability for the upper part and preventing it from collapsing.

The length of the container may vary greatly but for large scale projects is it intended to be several hundred metres long. In the normal case the whole container is to be designed as described above but positive effects will arise regardless however large or small part of the plant which is designed according to the criteria described above. Even though it is advantageous that a larger part of the container is designed according to the above described method there will be a positive effect even though only a small part of the plant is designed in this way and there will be a detectable difference even if only a part as short as at least 10 metres of the plant is designed according to the above criteria.

Below follows a few examples of how a plant according to the invention may be designed.

BRIEF DESCRIPTION OF DRAWINGS

Fig. 1          discloses a side view of a container for a wave power plant

Fig. 2 a - j    discloses cross-sectional views of a container in a wave power plant as viewed from the side wherein different stages during energy production is exemplified

Fig. 3          discloses an enlargement of a portion of figure 2j

Fig. 4 a - e    disclose examples of different cross-sectional areas of a container

DETAILED DESRIPTION OF THE INVENTION

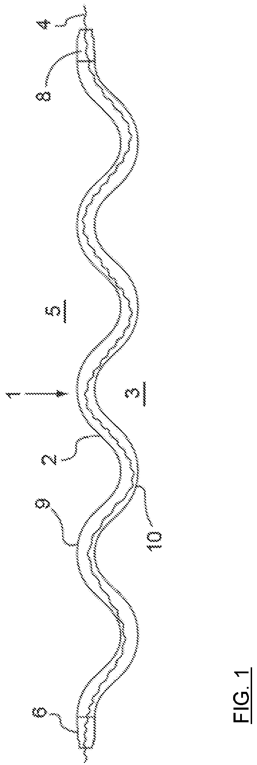

The invention is suitable to be used in such a plant as briefly described with reference to figure 1 which discloses a container 2 for a wave power plant 1. The container 2 is immersed in a liquid 3 which in this case is water. The container 2 is constructed so that it floats at the surface 4 and it is also constructed to be flexible so that it may follow the motions of the waves. The container is at its first end provided with some kind of inlet or opening 6 so that the liquid 3 and/or a gas 5, in this case air, may flow into the container 2 and at its second end provided with an outlet 8 in order to guide the flow forward to an energy converter (not shown), for example a turbine. It is not essential for the inventive idea exactly how the inlets and/or the outlets are designed. Under certain circumstances it may be advantageous to connect several containers 2 and bring together flows from several outlets 8 before the flow is guided onward to the energy converter. When the container 2 follows the upwards and downward motions of the waves it will assume a wave shaped profile. The wave motions will thus cause the container to assume positions having different potential energy in at least a first portion 9 and a second portion 10. The motion of the waves will induce a flow of liquid 3 and air 5 through the flexible container in a direction from the inlet or opening 6 at its first end towards the outlet 8 at its second end. The wave motion will cause a pressure to build up within the container 2 by the use of the fluids (the liquid 3 and the gas 5) which flow towards the outlet 8 and the energy contained in the flow may be used.

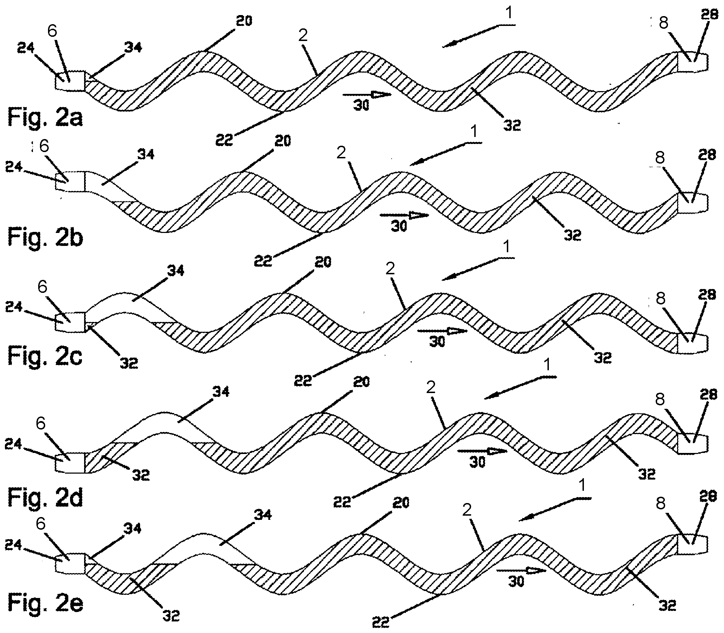

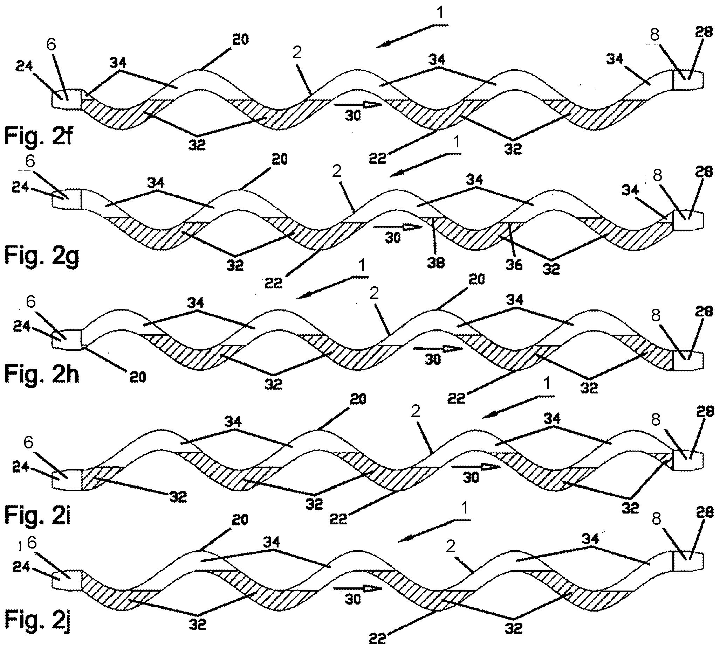

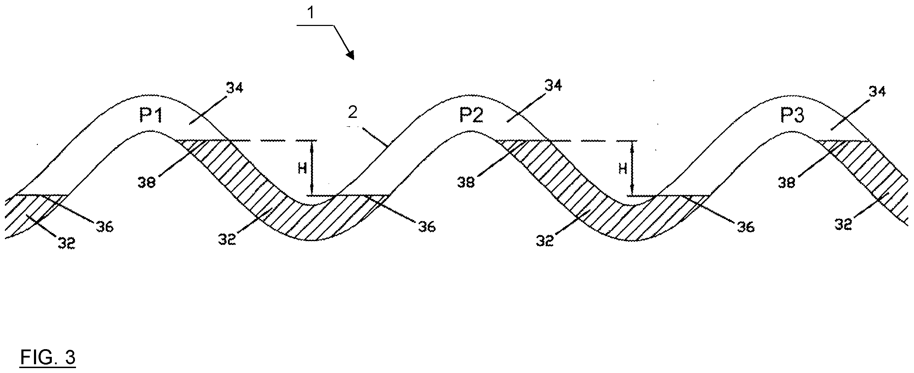

The method according to the invention for extracting energy from wave motion in a liquid 3 by the use of a wave power device will be exemplified in a general manner with reference to figure 2a - figure 2j and figure 3. Figure 2a discloses how the container 2 according to figure 1 is influenced by waves along its extension in its longitudinal direction 30. The container 2 comprises a first fluid 32, which is illustrated by dashed areas, and a second fluid 34, where in this example the first fluid 32 has a higher density than the second fluid 34. The fluids 32, 34 in this general example can for example correspond to the above mentioned liquid 3 and gas 5.

The container is arranged to, under the influence of the wave motion, allow a first portion 20 of the container to arrange itself in a first position and a second portion 22 of the container 2 in a second position wherein the positions correspond to different potential energies. In the example, the first position corresponds to a higher potential energy than the second position.

The flow between the inlet 6 and the outlet 8 is controlled so that the flow velocity in the extension direction 30 essentially corresponds to the propagation velocity of the wave motions in the extension direction 30. In order to be able to perform this control of the flow velocity may information be collected from an arrangement which measures the wave motions such as a wave radar and/or wave buoy.

The flow velocity of the first fluid may as an alternative be controlled so that it instead corresponds to a multiple of the propagation velocity of the waves, for example when the container 2 is filled with both the fluids 32, 34. The control of the flow velocity is performed by the use of a control arrangement 28. It is further disclosed in figure 2a how a certain amount of the second fluid 34 has been added to the container 2 via a fluid adding means 24 which for example may be a controllable valve.

Figure 2b discloses the wave power device 1 at a later stage than in figure 2a. At this stage, a further amount of the second fluid 34 has been added while the flow velocities through the container 2 are essentially the same.

Figure 2c discloses the wave power device 1 at an additional later stage. At this stage, a further amount of the first fluid 32 is added to the container 2.

Figure 2d discloses the wave power device 1 at an additional later stage. The first fluid 32 is still added to the container 2 while the flow velocities are essentially the same.

Figure 2e discloses the wave power device 1 at an additional later stage, which corresponds to a time point at a wave period later than the state in figure 2a. Once again, addition of the second fluid 34 to the container 2 has started.

The process disclosed in figure 2a - figure 2e is repeated until the whole container is filled up with alternating batches of the first fluid 32 and the second fluid 34, respectively, as disclosed in figure 2f.

When this state has been achieved, the fluids 32, 34 may conserve their velocity through the container 2 by themselves. The control arrangement 28 is thus no longer needed for controlling the flow velocities of the fluids since the fluids 32, 34 will arrange themselves in order to achieve the lowest possible potential energy. This means that the fluids 32, 34 themselves will contribute to maintaining the flow velocity through the container 2. The fluids 32, 34 in the container 2 are thus close to an equilibrium state in which the two adjacent delimiting end surfaces in each batch of both fluids 32, 34 are located at essentially the same level. When the wave power device 1 is in this mode it will thus produce a flow of the fluids 32, 34 having a velocity which essentially is a function of the propagation velocity of the waves. In this mode the device may thus be used as a pump.

Figure 2g discloses the wave power device 1 at a later stage than in figure 2f. Here the flow resistance through the container is controlled so that it has been increased by the use of the control arrangement 28. The alternating addition of the fluids 32, 34 is adjusted at the inlet 6 so that the displacement relative to the equilibrium state is maintained along the container 2. The introduction of the flow restriction will change the equilibrium state shown in figure 2f and will cause the two delimiting end surfaces of each batch of the first fluid 32 located in the container 2 to be displaced relative each other, whereby the end surface 36 located closest to the outlet 8 will be at a lower level than the end surface 38 which is located closest to the inlet 6. In figure 2h - figure 2j the flow resistance is further increased which means that the difference of the levels between the two end surfaces 36, 38 will increase further.

Figure 3 discloses an enlargement of a portion of the container 2 when it is in a state as disclosed in figure 2j. As may be realized from figure 3 each portion of the container 2 which is filled by the first fluid 32 is displaced so that the end surface 36 which is closest to the outlet 8 is located at a lower level than the end surface 38 which is located closest to the inlet 6. This means in turn that the pressure at each end surface 36, i.e. the one which is closest to the outlet 8, is higher than the pressure at each other end surface 38, i.e. the one which is closest to the inlet 6. The pressure difference between the first end surface 36 and the second end surface 38 corresponds to a fluid column of the first fluid 32 having a height H which is the same as the difference of the levels between the first end surface 36 and the second end surface 38. This means that there is an increase of pressure in the container 2 for each batch of the first fluid 32 and thus a third pressure P3, in a portion of the second fluid 34 which is located at the rightmost position (closest to the outlet) in figure 3, is higher than a second pressure P2 of the second fluid 34 in the middle portion which in turn is higher than a first pressure P1 in a portion at the left (closest to the inlet). There is thus an accumulated pressure increase from the inlet 6 to the outlet 8 of the container 2 and this increase may for example be used to produce energy.

This may as indicated earlier be realized by a flow of the pressurized fluids 32, 34 through the energy converter, for example a turbine, which in turn is connected to an energy generator which produces energy. A turbine connected to a generator as described above may also be the earlier mentioned control arrangement 28. In order to increase the flow velocity should the generator function as a motor and the turbine as a pump.

All control of the wave power device 1, for example the fluid adding means 24 and the control arrangement 28 may for example be controlled by a not shown control unit in a known manner.

A more detailed description of how the plant is intended to work may for example be found in WO 2008/091208.

Other plants suitable for the invention are for example disclosed in WO2010/007067, WO2007/015269, RU 22004837, SU 1129407 and WO84/00583

The arrangement described herein differs from the previous described prior art in that the cross-sectional surface for at least some portion of the container 2 differs from earlier known containers. The container 2 described herein has an inner width B which is larger than its inner height a. By width is herein referred to an inner, horizontal distance between two sides of the container while height refers to a vertical inner distance between a lower and an upper limiting surface area.

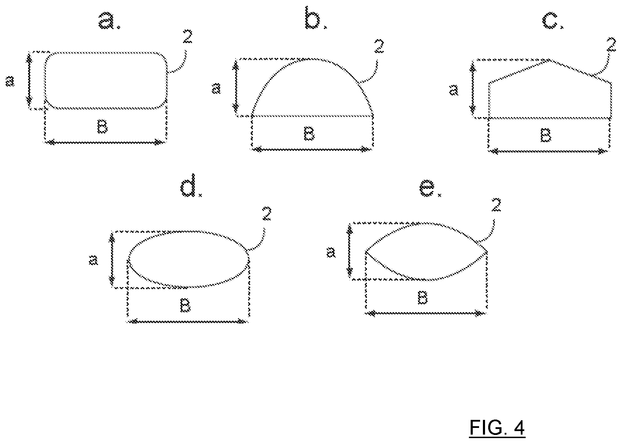

Figures 4 a - e disclose some examples of different embodiments of the cross-sectional area of the container 2 wherein its width B and its height **a** are indicated.

In figure 4a is disclosed the radial cross-section of a container 2 which has the shape of a rectangle having somewhat rounded corners. The width B is about twice as large as the height a. Such a shape will render a relatively small contact surface between the walls of the container and a liquid (or gas) which flows through the container if there are given maximum height and width which shall be used having largest possible flow volume.

In figure 4b is disclosed the radial cross-section of a container 2 having a shape of a half circle having its planar surface facing downwards. Its width at its broadest location corresponds to the diameter of the circle while its height corresponds to the radius. This embodiment of the container 2 is thus provided with a width which is twice as large as its height. An advantage by using this appearance compared to the suggested shape in figure 4a is that the arc shaped upper part may be self-supported in a more efficient way and thus avoid that the upper part collapses and breaks in. Bearing in mind that the container shall be designed so that it is flexible and may adapt to the motions of the waves may it be necessary or desirable to use material having a rather low stiffness. In order to avoid that the container collapses it may thus be necessary having a shape stable structure of the container.

In figure 4c is disclosed a suggested cross-sectional area of a container 2 which is intended to partly make use of the benefits of the structures of the container shown in figures 4a and 4b. Its lower part and side walls correspond to a rectangle while its upper limiting surface corresponds to a roof ridge shape. Such a construction comprising a roof ridge will provide an enlarged stiffness of the structure compared to the geometry of the cross-section of the container disclosed in figure 4b but will not make use of the maximum allowed height in the same way. However, it will not have the same strength as the structure shown in figure 4b but may be adapted to reduce the friction for a flow where the height is limited.

In figure 4d is disclosed an elliptic shape which corresponds to a robust structure which can be self-supported in an efficient way and provide a strong structure. In case it is desired or necessary with a relatively large ratio between the width and height, e.g. larger than 3, this construction may however induce a relatively large friction compared to for example a rectangular cross-section.

In figure 4e is disclosed a container 2 having a cross-section similar to the elliptic shape disclosed in figure 4d but in this embodiment is its edges or curvature somewhat sharpened at the location where the radius of curvature of a corresponding ellipse is smallest.

The above embodiments are only a few examples of how a container according to the invention may be designed. Depending on the material and dimensions may the above described shapes, or others, be chosen. In case the pipes are rather large is it in general of great importance that the shape greatly contributes to the strength of the container while the contact surface per mass unit will be reduced with enlarged dimensions, and thus also the friction per mass unit, and it may be suitable to choose shape stable and rigid geometries even though it may render the shape to be less adapted to minimize the friction losses. For small dimensions, e.g. rather small cross-sectional areas, is it on the contrary often of great importance to minimize friction. Small cross-sectional areas will render a larger contact surface per mass unit between the fluid and the container walls. Since a smaller cross-sectional area implies that the structural loads of the container will decrease and thus render a larger number of geometries to become sufficiently rigid and stable the design may be more focused on minimizing friction instead of strength and shape stability.

## Claims

1. A wave power device (1) for the extraction of energy from wave motion in a liquid (3) which device (1) comprises a container (2) intended to at least partially be located in said liquid (3) from which the wave energy is extracted, said container (2) provided with one or several openings (6) for admitting said liquid (3) and a gas (5) into the container and at least one outlet (8) whereby said container (2) at least partly is designed as an oblong unit adapted to be influenced by and essentially follow said wave motion so that the container (2) will assume a wave shaped contour wherein the container in at least a first portion (9) and a second portion (10) assume positions with different potential energy relative each other so that a pressure is built up within the container (2) by the use of the liquid (3) and the gas (5) which flows towards the outlet (8) influenced by said wave motions whereby energy in said flow is extracted by an energy converter connected to the container (2), wherein the container (2) at least along a part of its length is designed so that its width is larger than its height, **characterized in that** the height of the container (2) is between 0,2 and 0,8 parts of the expected wave height where the wave power device (1) is to be located..

2. A wave power device (1) according to claim 1 **characterized in that** the container (2) at least along a part of its length is designed so that its width is at least 20 % larger than its height.

3. A wave power device (1) according to claim 2 **characterized in that** the container (2) at least along a part of its length is designed so that its width is at least twice as large as its height.

4. A wave power device (1) according to any previous claim **characterized in that** the container (2) at least along a part of its length is designed so that its width is less than 15 times larger than its height, preferably less than 6 times larger than its height.

5. A wave power device (1) according to any previous claim **characterized in that** the container (2) at least along a part of its length is designed so that its width is between 2 and 5 times larger than its height, preferably between 3 and 5 times larger.

6. A wave power device (1) according to any one of the preceding claims, **characterized in that** the height of the container (2) is between 0,2 and 0,55 parts of the expected wave height where the wave power device is to be located.

7. The wave power device according to any one of the preceding claims, wherein a cross-section of said container is substantially semicircular, with its planar surface facing downwards.

8. The wave power device according to any one of claims 1 to 6, wherein a lower portion of a cross-section of said container is substantially rectangular, and its upper limiting surface corresponds to a roof ridge shape.

9. The wave power device according to any one of the preceding claims, further comprising a supportive structure arranged inside said container in order to provide an improved strength and stability.

10. A method for extraction of wave energy **characterized by** that a wave power device (1) according to any one of claims 1 to 9 is placed in a liquid (3) which has an expected wave height h and the height of the container (2) is between 0,2 and 0,8 parts of the expected wave height, preferably between 0,2 and 0,55 parts of the expected wave height.

## Patentansprüche

1. Wellenenergievorrichtung (1) für die Gewinnung von Energie aus Wellenbewegung in einer Flüssigkeit (3), wobei die Vorrichtung (1) einen Behälter (2) umfasst, der dazu vorgesehen ist, sich mindestens teilweise in der Flüssigkeit (3) zu befinden, aus der die Wellenenergie gewonnen wird, wobei der Behälter (2) mit einer oder mehreren Öffnungen (6) zum Hineinlassen der Flüssigkeit (3) und eines Gases (5) in den Behälter und mindestens einem Auslass (8) versehen ist, wodurch der Behälter (2) mindestens teilweise als eine längliche Einheit ausgestaltet ist, die dazu ausgelegt ist, durch die Wellenbewegung beeinflusst zu werden und dieser im Wesentlichen derart zu folgen, dass der Behälter (2) eine wellenförmige Kontur annimmt, wobei der Behälter in mindestens einem ersten Abschnitt (9) und einem zweiten Abschnitt (10) Positionen mit unterschiedlicher potenzieller Energie bezogen aufeinander einnimmt, derart dass durch die Benutzung der Flüssigkeit (3) und des Gases (5), das, beeinflusst durch die Wellenbewegungen, hin zu dem Auslass (8) strömt, innerhalb des Behälters (2) ein Druck aufgebaut wird, wodurch Energie in dem Strom durch einen Energiewandler gewonnen wird, der mit dem Behälter (2) verbunden ist, wobei der Behälter (2) mindestens entlang eines Teils seiner Länge derart ausgestaltet ist, dass seine Breite größer ist als seine Höhe, **dadurch gekennzeichnet, dass** die Höhe des Behälters (2) zwischen 0,2 und 0,8 Teile der voraussichtlichen Wellenhöhe dort, wo die Wellenenergievorrichtung (1) sich befinden soll, beträgt.

2. Wellenenergievorrichtung (1) nach Anspruch 1, **dadurch gekennzeichnet, dass** der Behälter (2) mindestens entlang eines Teils seiner Länge derart ausgestaltet ist, dass seine Breite mindestens 20 % größer ist als seine Höhe.

3. Wellenenergievorrichtung (1) nach Anspruch 2, **dadurch gekennzeichnet, dass** der Behälter (2) mindestens entlang eines Teils seiner Länge derart ausgestaltet ist, dass seine Breite mindestens zwei Mal so groß ist wie seine Höhe.

4. Wellenenergievorrichtung (1) nach einem vorhergehenden Anspruch, **dadurch gekennzeichnet, dass** der Behälter (2) mindestens entlang eines Teils seiner Länge derart ausgestaltet ist, dass seine Breite weniger als 15 Mal größer als seine Höhe, vorzugsweise weniger als 6 Mal größer als seine Höhe, ist.

5. Wellenenergievorrichtung (1) nach einem vorhergehenden Anspruch, **dadurch gekennzeichnet, dass** der Behälter (2) mindestens entlang eines Teils seiner Länge derart ausgestaltet ist, dass seine Breite zwischen 2 und 5 Mal größer als seine Höhe, vorzugsweise zwischen 3 und 5 Mal größer, ist.

6. Wellenenergievorrichtung (1) nach einem der vorhergehenden Ansprüche, **dadurch gekennzeichnet, dass** die Höhe des Behälters (2) zwischen 0,2 und 0,55 Teile der voraussichtlichen Wellenhöhe dort, wo die Wellenenergievorrichtung sich befinden soll, beträgt.

7. Wellenenergievorrichtung nach einem der vorhergehenden Ansprüche, wobei ein Querschnitt des Behälters im Wesentlichen halbkreisförmig ist, wobei seine ebene Fläche nach unten weist.

8. Wellenenergievorrichtung nach einem der Ansprüche 1 bis 6, wobei ein unterer Abschnitt eines Querschnitts des Behälters im Wesentlichen rechteckig ist und seine obere Begrenzungsfläche einer Dachfirstform entspricht.

9. Wellenenergievorrichtung nach einem der vorhergehenden Ansprüche, die ferner eine Stützstruktur umfasst, die im Inneren des Behälters angeordnet ist, um für eine verbesserte Festigkeit und Stabilität zu sorgen.

10. Verfahren zur Gewinnung von Wellenenergie, **dadurch gekennzeichnet, dass** eine Wellenenergievorrichtung (1) nach einem der Ansprüche 1 bis 9 in einer Flüssigkeit (3) angeordnet ist, die eine voraussichtliche Wellenhöhe h aufweist, und die Höhe des Behälters (2) zwischen 0,2 und 0,8 Teile der voraussichtlichen Wellenhöhe, vorzugsweise zwischen 0,2 und 0,55 Teile der voraussichtlichen Wellenhöhe, beträgt.

## Revendications

1. Dispositif à énergie ondulatoire (1) pour l'extraction d'énergie du mouvement ondulatoire dans un liquide (3), lequel dispositif (1) comprend un récipient (2) destiné à être situé au moins partiellement dans ledit liquide (3) duquel l'énergie ondulatoire est extraite, ledit récipient (2) étant doté d'une ou plusieurs ouvertures (6) pour admettre ledit liquide (3) et un gaz (5) dans le récipient et au moins d'une sortie (8), moyennant quoi ledit récipient (2) est conçu au moins partiellement en tant qu'une unité oblongue adaptée pour être influencée par et essentiellement suivre ledit mouvement ondulatoire de façon à ce que le récipient (2) adopte un contour ondulé dans lequel le récipient, dans au moins une première partie (9) et une seconde partie (10), adopte des positions avec une énergie potentielle différente l'une par rapport à l'autre de sorte qu'une pression s'accumule à l'intérieur du récipient (2) par l'utilisation du liquide (3) et du gaz (5) qui s'écoule en direction de la sortie (8) influencé par lesdits mouvements ondulatoires, moyennant quoi l'énergie dans ledit flux est extraite par un convertisseur d'énergie relié au récipient (2), dans lequel le récipient (2), au moins le long d'une partie de sa longueur, est conçu de façon à ce que sa largeur soit plus grande que sa hauteur, **caractérisé en ce que** la hauteur du récipient (2) est située entre 0,2 et 0,8 parties de la hauteur d'onde prévue, là où le dispositif à énergie ondulatoire (1) doit être situé.

2. Dispositif à énergie ondulatoire (1) selon la revendication 1, **caractérisé en ce que** le récipient (2), au moins le long d'une partie de sa longueur, est conçu de façon à ce que sa largeur soit au moins 20 % plus grande que sa hauteur.

3. Dispositif à énergie ondulatoire (1) selon la revendication 2, **caractérisé en ce que** le récipient (2), au moins le long d'une partie de sa longueur, est conçu de façon à ce que sa largeur soit au moins deux fois aussi grande que sa hauteur.

4. Dispositif à énergie ondulatoire (1) selon l'une quelconque revendication précédente, **caractérisé en ce que** le récipient (2), au moins le long d'une partie de sa longueur, est conçu pour avoir sa largeur moins de 15 fois plus grande que sa hauteur, de préférence moins de 6 fois plus grande que sa hauteur.

5. Dispositif à énergie ondulatoire (1) selon l'une quelconque revendication précédente, **caractérisé en ce que** le récipient (2), au moins le long d'une partie de sa longueur, est conçu de façon à ce que sa largeur soit plus grande de 2 à 5 fois sa hauteur, de préférence de 3 à 5 fois plus grande.

6. Dispositif à énergie ondulatoire (1) selon l'une quelconque des revendications précédentes, **caractérisé en ce que** la hauteur du récipient (2) est située entre 0,2 et 0,55 parties de la hauteur d'onde prévue là où le dispositif à énergie ondulatoire doit être situé.

7. Dispositif à énergie ondulatoire selon l'une quelconque des revendications précédentes, **caractérisé en ce qu'**une section transversale dudit récipient est essentiellement semi-circulaire, avec sa surface planaire orientée vers le bas.

8. Dispositif à énergie ondulatoire selon l'une quelconque des revendications 1 à 6, dans lequel une partie inférieure d'une section transversale dudit récipient est essentiellement rectangulaire, et sa surface de délimitation supérieure correspond à une forme de faîte de toit.

9. Dispositif à énergie ondulatoire selon l'une quelconque des revendications précédentes, comprenant en outre une structure porteuse agencée à l'intérieur dudit récipient pour fournir une résistance et une stabilité améliorées.

10. Procédé d'extraction d'énergie ondulatoire, **caractérisé en ce qu'**un dispositif à énergie ondulatoire (1) selon l'une quelconque des revendications 1 à 9, est placé dans un liquide (3) qui présente une hauteur d'onde h prévue et la hauteur du récipient (2) est située entre 0,2 et 0,8 parties de la hauteur d'onde prévue, de préférence entre 0,2 et 0,55 parties de la hauteur d'onde prévue.

FIG. 1

Fig. 2a

Fig. 2b

Fig. 2c

Fig. 2d

Fig. 2e

Fig. 2f

Fig. 2g

Fig. 2h

Fig. 2i

Fig. 2j

EP 2 769 086 B1

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- SE 529687
- US 6476511 B
- GB 2024957 A
- GB 1579929 A
- WO 2008091208 A
- WO 2007015269 A
- WO 2010007607 A
- WO 2010007067 A
- RU 22004837
- SU 1129407
- WO 8400583 A